Europäisches Patentamt

(19) European Patent Office

Office européen des brevets

(11) Numéro de publication: **0 141 731**
A2

(12) **DEMANDE DE BREVET EUROPEEN**

(21) Numéro de dépôt: **84402142.8**

(22) Date de dépôt: **24.10.84**

(51) Int. Cl.⁴: **G 01 L 1/22**

(30) Priorité: **04.11.83 FR 8317545**

(43) Date de publication de la demande: **15.05.85**
**Bulletin 85/20**

(84) Etats contractants désignés: **AT BE CH DE GB IT LI LU NL SE**

(71) Demandeur: **SFERNICE SOCIETE FRANCAISE DE L'ELECTRO-RESISTANCE, 59, rue Gutenberg, F-75737 Paris Cédex 15 (FR)**

(72) Inventeur: **Flassayer, Claude, 80 Avenue de la Lanterne, F-06200 Nice (FR)**

(74) Mandataire: **Bouju, André, 38 Avenue de la Grande Armée, F-75017 Paris (FR)**

(54) Capteur de force comprenant un barreau élastique pourvu de jauges de contrainte.

㉷ Le capteur de force comprend un barreau (1) en matériau élastique destiné à être soumis aux contraintes à mesurer et dont la surface extérieure comporte des jauges de contrainte.

Ce barreau (1) est sensiblement cylindrique et comprend sur sa surface extérieure une série de bandes résistives (3a, 4, 4a, 5, 5a) disposées suivant au moins une hélice, ces bandes étant de longueurs sensiblement égales, chaque bande s'étendant sur une partie du pourtour du barreau (1) et étant séparée de la bande suivante dans le sens de la progression de l'hélice, et les extrémités de certaines de ces bandes étant reliées électriquement par des lames conductrices (7, 8, 9).

Utilisation pour mesurer des contraintes de flexion, de torsion et de cisaillement.

EP 0 141 731 A2

ACTORUM AG

"Capteur de force comprenant un barreau élastique pourvu de jauges de contrainte"

La présente invention concerne un capteur de force destiné à mesurer différentes contraintes mécaniques, telles que des efforts de cisaillement, de torsion ou de flexion.

L'invention vise également le procédé de fabrication d'un tel capteur de force.

Dans les réalisations connues, ce genre de capteur comporte généralement un barreau en matière élastique dont les extrémités opposées sont soumises aux contraintes de cisaillement, de torsion ou de flexion à mesurer.

Sur la surface extérieure de ce barreau qui constitue le corps d'épreuve du capteur, on applique, le plus souvent par collage, des jauges de contrainte constituées par des éléments résistifs qui, lorsque le barreau est soumis à une contrainte mécanique, sont étirés ou contractés, ce qui a pour effet de modifier leur résistance électrique. Ces éléments résistifs sont en général connectés ensemble suivant un pont de Wheatstone qui délivre à ses bornes un signal électrique proportionnel à la contrainte appliquée au barreau.

La disposition des éléments résistifs sur le barreau varie en fonction du type de contraintes à mesurer.

La précision et la fidélité des mesures effectuées sur ces capteurs de force, dépend principalement de la précision avec laquelle les jauges de contrainte ont été appliquées sur le corps d'épreuve.

L'exigence de cette précision rend la fabrication de ces corps d'épreuve délicate et onéreuse et peu adaptée à une production industrielle en grande série.

Le but de la présente invention est de remédier à cet inconvénient en créant un capteur de force de fabrication peu coûteuse, comportant des jauges de contrainte qui sont disposées sur ce barreau d'une manière précise et reproductible, cette disposition des jauges permettant, en modifiant simplement les connexions électriques entre celles-ci, de mesurer des contraintes de diverses natures.

Le capteur de force visé par l'invention comprend un barreau en matériau élastique destiné à être soumis aux contraintes à mesurer et dont la surface extérieure comporte des jauges de contrainte constituées par des éléments résistifs dont la résistance varie en fonction des contraintes appliquées au barreau.

Suivant l'invention, ce capteur de force est caractérisé en ce que le barreau est sensiblement cylindrique, est au moins isolé électriquement sur sa surface extérieure et comprend sur cette dernière une série de bandes résistives disposées autour et le long du barreau suivant au moins une hélice, ces bandes étant de longueur sensiblement égales, chaque bande s'étendant suivant une partie du pourtour du barreau et étant séparée de la bande suivante dans le sens de la progression de l'hélice et les extrémités de certaines de ces bandes étant reliées électriquement par des lames conductrices.

Cette disposition en hélice des bandes résistives sur la surface cylindrique du barreau peut être réalisée d'une manière à la fois précise et reproductible, de sorte que les contraintes subies par le barreau peuvent être mesurées d'une manière précise et fidèle.

Par ailleurs, le fait que le barreau soit sensiblement cylindrique présente, outre l'avantage de la facilité de réalisation, de répartir les contraintes de torsion d'une manière constante sur toute la surface de ce barreau.

D'autre part, en modifiant simplement les connexions électriques entre les différentes bandes résistives, c'est-à-dire en modifiant les lames conductrices qui relient les extrémités de certaines bandes résistives, le barreau peut être adapté aisément à la mesure de contraintes de diverses natures, telles que les contraintes

3

de flexion, de cisaillement ou de torsion.

Selon une version avantageuse de l'invention, le barreau comporte sur sa surface extérieure deux méplats symétriques par rapport à l'axe du barreau et qui séparent les extrémités des bandes résistives.

Ces méplats constituent un moyen simple à mettre en oeuvre pour séparer les extrémités des bandes résistives.

Selon une réalisation préférée, le barreau est en céramique, par exemple du type nitrure de silicium, carbure de silicium ou zircone.

Cette céramique, tout en étant parfaitement isolante, présente des propriétés élasto-mécaniques, parfaitement adaptées à l'application considérée par la présente invention.

Les bandes résistives sont réalisées de préférence à partir d'une couche d'alliage piézorésistif tel qu'un alliage de nickel et de chrome ou de chrome et de silicium.

Selon un autre aspect de l'invention, le procédé pour fabriquer le capteur conforme à l'invention est caractérisé en ce qu'il comprend les étapes suivantes :

A/ On applique sur le barreau en matériau élastique, électriquement isolant ou isolé en surface, une couche d'un matériau électriquement résistif,

B/ On usine la couche selon une trajectoire hélicoïdale s'étendant autour et le long du barreau, de façon à laisser en relief, sur la surface du barreau, une ou plusieurs bandes continues et hélicoïdales en matériau électriquement résistif,

C/ On usine deux zones longitudinales et opposées du barreau, de façon à séparer la ou les bandes continues en éléments de bandes résistives,

D/ On relie les extrémités de certains des éléments de bandes par des lames conductrices obtenues par dépôt de métal conducteur.

4

Ce procédé permet d'obtenir, lors de l'étape B, une ou plusieurs bandes résistives hélicoïdales dont la position et la reproductibilité sont extrêmement précises.

L'usinage selon l'étape B est réalisé de préférence selon une technique dite de "spiralage" qui consiste à faire tourner le barreau autour de son axe, à déplacer celui-ci suivant la direction de son axe et à envoyer sur la surface de ce barreau un jet de sable ou un faisceau laser fixe.

L'ensemble des étapes du procédé peut être exécuté d'une manière automatique, parfaitement adaptée à la production en grande série de capteurs de force à la fois précis, fidèles et peu onéreux.

D'autres particularités et avantages de l'invention apparaîtront encore sur la description ci-après.

Aux dessins annexés donnés à titre d'exemples non limitatifs :

- la figure 1 est une vue en plan d'un capteur de force conforme à l'invention,

- la figure 2 est une vue en bout de ce capteur,

- la figure 3 montre le branchement en pont de Wheatstone des bandes résistives du capteur,

- la figure 4 est une vue en perspective d'un barreau cylindrique revêtu d'une couche résistive,

- la figure 5 est une vue en perspective du barreau montrant les bandes résistives obtenues par usinage de la couche résistive,

- la figure 6 est une vue en perspective du barreau après usinage des méplats et dépôt de lames conductrices d'interconnexion des éléments résistifs,

- la figure 7 est une vue en plan d'une variante de réalisation du capteur,

- la figure 8 est une vue en bout de ce capteur,

- la figure 9 est une vue en plan d'une autre variante du capteur,

0141731

5

- la figure 10 est une vue en bout de cette autre variante,

- la figure 11 est une vue en coupe longitudinale d'une troisième variante du capteur de force selon l'invention,

- la figure 12 est une vue en bout de ce capteur.

- la figure 13 est le schéma d'un capteur pour la mesure de contraintes de cisaillement,

- la figure 14 montre le schéma électrique de branchement des jauges de contrainte de ce capteur,

- la figure 15 est le schéma d'un capteur pour la mesure de contraintes de torsion,

- la figure 16 montre le schéma électrique de branchement des jauges de contrainte de ce capteur,

- la figure 17 est le schéma d'un capteur pour la mesure de contraintes de flexion,

- la figure 18 montre le schéma électrique de branchement des jauges de contrainte de ce capteur.

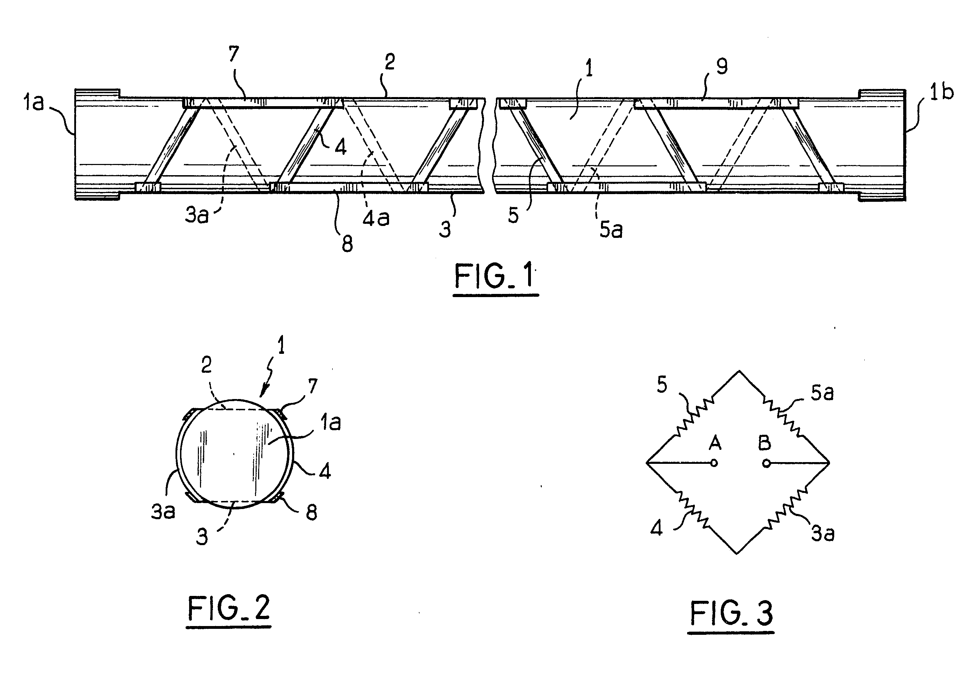

Dans la réalisation des figures 1 et 2, le capteur de force comprend un barreau 1 dont les extrémités opposées 1a et 1b sont destinées à être encastrées dans deux organes mobiles l'un par rapport à l'autre non représentés, de façon à soumettre le barreau 1 à des contraintes de torsion, de flexion ou de cisaillement que l'on veut mesurer.

Ce barreau 1 est un cylindre sur lequel on a ménagé deux méplats 2, 3 symétriques par rapport à l'axe du barreau.

Ce barreau 1 est en matériau présentant des propriétés élasto-mécaniques adaptées aux contraintes qu'il doit subir.

De préférence, ce barreau est réalisé en céramique du type structurelle, telle que du nitrure de silicium, du carbure de silicium ou du zircone.

Cependant, ce barreau 1 peut également être réalisé en alliage d'aluminium anodisé, en acier émaillé ou même en matière plastique, l'essentiel étant qu'il soit électriquement isolé, au moins en surface.

Autour et le long du barreau 1, est disposée une série de bandes résistives telles que 3a, 4, 4a, 5, 5a d'épaisseurs constantes, de longueurs et de largeurs égales. Les bandes 3a, 4 et 4a d'une part et les bandes 5, 5a d'autre part sont disposées sur deux hélices de pas inverses et symétriques par rapport à un plan perpendiculaire à l'axe du barreau et passant par le milieu de celui-ci.

Chaque bande résistive telle que 3a, 4, 4a, 5, 5a s'étend sur une partie du pourtour du barreau 1 et est séparée de la bande suivante telle que 4a dans le sens de la progression de l'hélice. Dans l'exemple représenté cette séparation est réalisée au moyen des méplats 2, 3 (voir notamment la figure 2).

Ainsi, les différentes bandes résistives sont isolées électriquement les unes des autres par les méplats 2, 3.

Les extrémités des bandes résistives sont reliées entre elles par des lames conductrices 7, 8, 9 qui sont disposées alternativement le long des bords longitudinaux des méplats 2,3.

Dans l'exemple représenté, les bandes résistives 3a, 4, 4a, 5, 5a sont connectées les unes aux autres suivant le pont de Wheatstone représenté sur la figure 3, aux bornes A et B duquel on peut mesurer le signal électrique engendré lorsque le pont est déséquilibré sous l'effet d'une contrainte appliquée sur le barreau 1.

Les bandes résistives 3a...5a sont réalisées en un matériau présentant une résistivité élevée, une bonne stabilité dans le temps et en température, ainsi que de bonnes propriétés piézorésistives (fort coefficient de jauge).

7

Parmi les matériaux répondant à ces conditions, on peut citer les alliages de nickel et de chrome et les alliages de chrome et de silicium.

Les lames conductrices 7, 8, 9 sont réalisées de préférence en métal bon conducteur de l'électricité tel que le cuivre.

On va maintenant décrire le procédé de fabrication du capteur de force conforme à l'invention.

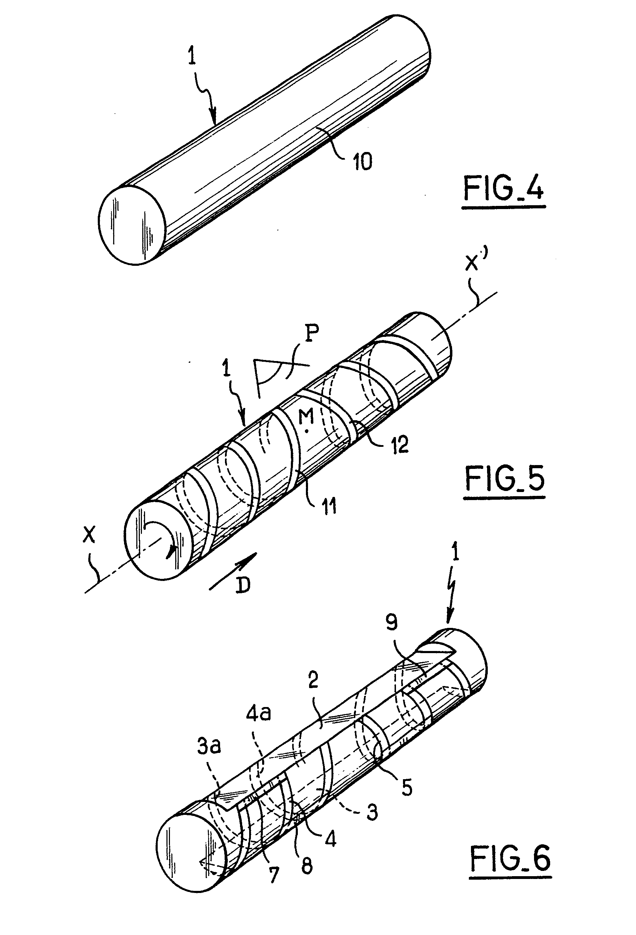

Dans une première étape (voir figure 4), on applique sur le barreau 1 en matériau élastique, électriquement isolant ou isolé en surface, une couche 10 d'un matériau résistif, tel que du nickel-chrome ou du chrome-silicium.

Cette couche 10 peut être déposée par métallisation sous vide, par pyrolyse, par dépôt chimique et/ou électro-chimique.

Dans une seconde étape (voir figure 5), on usine la couche 10 en matière résistive suivant une trajectoire hélicoïdale s'étendant autour et le long du barreau 1 de façon à laisser en relief sur la surface du barreau, deux bandes 11 et 12 continues et hélicoïdales en matière électriquement résistives, symétriques par rapport à un plan P perpendiculaire à l'axe X-X' et passant par le milieu M de celui-ci, et ayant des pas inverses.

Cet usinage peut être réalisé selon la technique dite de "spiralage" qui consiste à faire tourner le barreau 1 autour de son axe X-X', à déplacer celui-ci en même temps suivant la direction D de son axe et à envoyer simultanément sur la surface de ce barreau un jet de sable ou un faisceau de laser fixe de façon à éliminer la couche résistive 10 dans la zone située de part et d'autre de la bande résistive 11 ou 12.

Cette technique permet d'obtenir des bandes résistives 11 et 12 dont la position sur le barreau 1 est définie avec une très grande précision.

8

Dans une troisième étape (voir figure 6), on usine deux méplats 2, 3 parallèles et symétriques par rapport à l'axe du barreau 1, de façon à séparer les bandes continues 11 et 12 en éléments de bandes résistives 3a, 4, 4a, 5, comme indiqué sur la figure 1. Ces éléments de bandes 3a, 4, 4a, 5 sont ainsi isolés électriquement les uns des autres.

Dans une quatrième étape (voir figure 6), on relie certains des éléments de bandes par des lames conductrices 7, 8, 9 s'étendant le long des bords longitudinaux des méplats 2, 3. Ces lames conductrices 7, 8, 9 peuvent être obtenues par dépôt sous vide d'un métal conducteur de l'électricité tel que le cuivre.

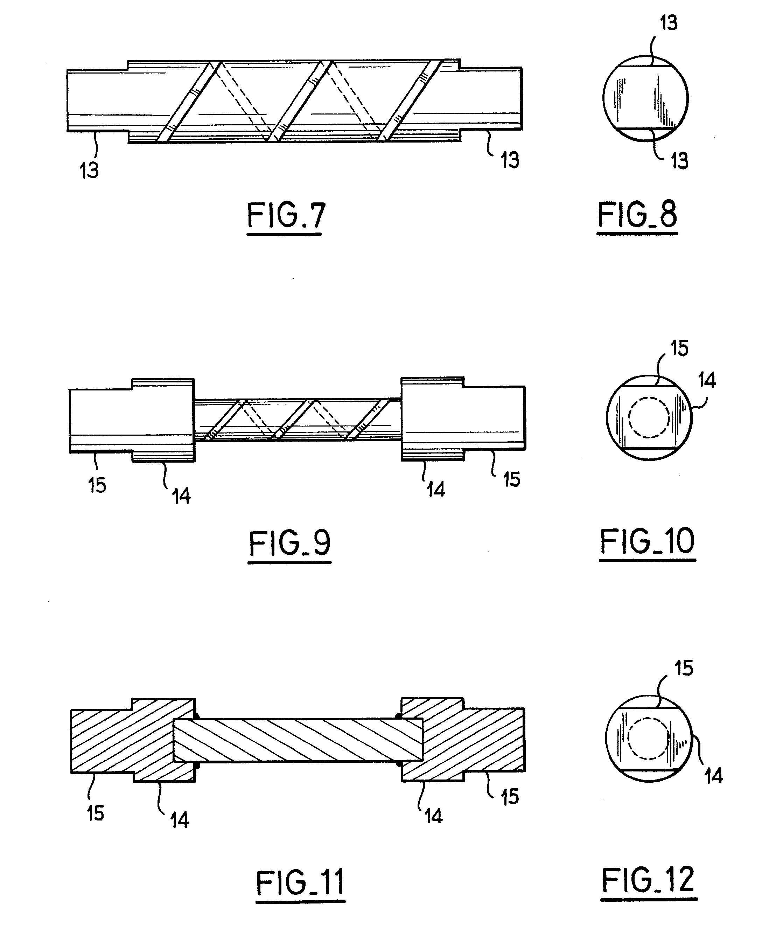

La réalisation des méplats 2, 3 est facultative. En effet, pour séparer les bandes continues 11 et 12 en éléments de bandes résistives isolés les uns des autres, il suffirait de graver dans la couche résistive 10 deux bandes symétriques par rapport à l'axe du barreau. Les barreaux représentés sur les figures 7 à 12 qui ne comportent pas de méplats, sont supposés présenter de telles bandes symétriques.

Les barreaux représentés sur les figures 7 à 10 sont monoblocs, comme dans le cas de la réalisation selon les figures 1 et 2, mais présentent des bandes résistives disposées suivant une seule hélice.

Les extrémités opposées du barreau représenté sur les figures 7 et 8 présentent des méplats 13 symétriques par rapport à l'axe du barreau, qui permettent d'encastrer ce barreau dans les organes entre lesquels on veut mesurer des contraintes mécaniques.

Le barreau représenté sur les figures 9 et 10 présente à ses extrémités opposées des embouts cylindriques 14 de section plus importante que celle du barreau et qui comportent des méplats 15 servant à l'encastrement du barreau.

La forme générale du barreau représenté sur les figures 11 et 12 est identique à celle du barreau conforme aux figures 9 et 10, mais il est en deux parties. La partie centrale cylindrique est emboîtée dans deux embouts 14 et liée à ceux-ci par exemple par soudage.

Comme il ressort de la description qui précède, le procédé conforme à l'invention permet de réaliser sur deux faces latérales opposées du barreau des bandes résistives de longueurs égales et dont la position est définie avec une extrême précision.

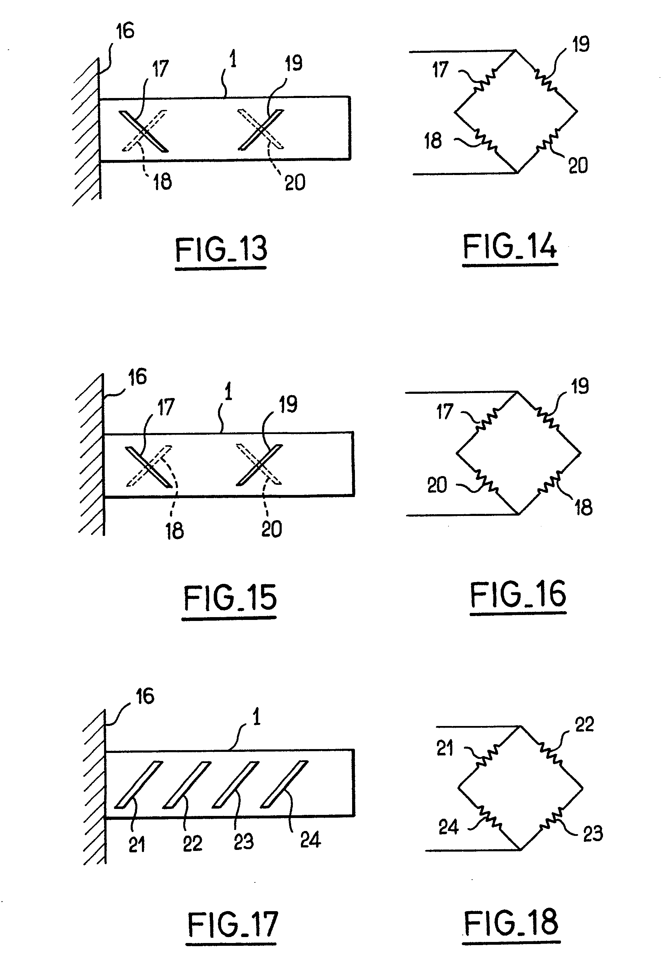

Selon ce procédé, on peut réaliser les divers types de capteurs de force représentés à titre d'exemples schématiquement sur les figures 13, 15 et 17.

La figure 13 représente un capteur de force dont le barreau 1 encastré dans une partie fixe 16 travaille en cisaillement. Il présente sur deux faces opposées du barreau cylindrique deux séries symétriques de bandes, comprenant chacune deux bandes résistives 17, 18 d'une part et 19, 20 d'autre part, disposées respectivement sur deux faces opposées du barreau suivant des directions inverses. Ces bandes résistives 17, 18; 19, 20 sont connectées électriquement les unes aux autres au moyen de bandes conductrices non représentées, de façon à former un pont de Wheatstone (voir figure 14) qui engendre un signal électrique proportionnel aux contraintes de cisaillement appliquées sur le barreau 1. Dans le cas de la figure 15, la disposition des bandes résistives 17, 18; 19, 20 est identique à celle de la figure 13. Cependant, leur branchement électrique est tel que les bandes 18 et 20 sont disposées sur des branches différentes du pont de Wheatstone (voir figure 16). De ce fait, le pont de Wheatstone engendre un signal électrique proportionnel aux contraintes de torsion appliquées au barreau 1.

Dans le cas de la figure 17, les bandes résistives 21, 22, 23, 24 sont disposées sur une seule face du barreau 1. Elles sont parallèles les unes aux autres et forment un angle avec la direction d'allongement du barreau. Ces bandes sont reliées électriquement les unes aux autres dans l'ordre 21, 22, 23, 24 de façon à former le pont de Wheatstone représenté sur la figure 18, qui est adapté à la mesure de contraintes de flexion.

Bien entendu, l'invention n'est pas limitée aux exemples que l'on vient de décrire et l'on peut apporter à ceux-ci de nombreuses modifications sans sortir du cadre de l'invention.

Ainsi, les matériaux constituant les bandes résistives peuvent être différents de ceux décrits, pourvu que leur résistivité soit suffisamment stable dans le temps et en température.

De même, le matériau constituant le barreau 1 pourra varier suivant l'importance des contraintes qu'il doit subir.

Par ailleurs, le procédé de gravure des bandes résistives peut être différent de ceux décrits, pourvu que ce procédé permette d'obtenir des bandes disposées avec précision suivant une ou plusieurs hélices.

11

<u>REVENDICATIONS</u>

1. Capteur de force comprenant un barreau (1) en matériau élastique, destiné à être soumis aux contraintes à mesurer et dont la surface extérieure comporte des jauges de contrainte constituées par des éléments résistifs (3a, 4, 4a, 5, 5a) dont la résistance varie en fonction des contraintes appliquées au barreau, caractérisé en ce que ce barreau (1) est sensiblement cylindrique, est au moins isolé électriquement sur sa surface extérieure et comprend sur celle-ci une série de bandes résistives (3a, 4, 4a, 5, 5a) disposées autour et le long du barreau suivant au moins une hélice, ces bandes étant de longueur sensiblement égale, chaque bande s'étendant suivant une partie du pourtour du barreau (1) et étant séparée de la bande suivante dans le sens de la progression de l'hélice et les extrémités de certaines de ces bandes étant reliées électriquement par des lames conductrices (7, 8, 9).

2. Capteur de force conforme à la revendication 1, caractérisé en ce que le barreau (1) comporte sur sa surface extérieure, deux méplats (2, 3) symétriques par rapport à l'axe du barreau et qui séparent les extrémités de bandes résistives (3a, 4, 4a, 5, 5a).

3. Capteur de force conforme à la revendication 2, caractérisé en ce que les lames conductrices (7, 8, 9) qui relient certaines des bandes résistives (3a, 4, 4a, 5, 5a) s'étendent le long des bords longitudinaux des méplats (2, 3).

4. Capteur de force conforme à l'une des revendications 1 à 3, caractérisé en ce que les lames conductrices (7, 8, 9) relient certaines des bandes résistives (3a, 4, 4a, 5, 5a) de façon à connecter ces dernières suivant un ou plusieurs ponts de Wheatstone.

5. Capteur de force conforme à l'une des rerendications 1 à 4, caractérisé en ce qu'il comporte deux séries de bandes résistives (3a, 4, 4a; 5, 5a...)

disposées suivant deux hélices de pas inverses et symétriques par rapport à un plan perpendiculaire à l'axe du barreau (1) et passant par le milieu de celui-ci.

6. Capteur de force conforme à l'une des revendications 1 à 5, caractérisé en ce que le barreau (1) est en céramique.

7. Capteur de force conforme à l'une des revendications 1 à 6, caractérisé en ce que les bandes résistives (3a, 4, 4a, 5, 5a) sont réalisées à partir d'une couche d'alliage piézorésistif tel que le nickel-chrome ou le chrome-silicium.

8. Capteur de force conforme à l'une des revendications 1 à 7, caractérisé en ce que les lames conductrices (7, 8, 9) sont réalisées à partir d'un dépôt de cuivre.

9. Procédé pour fabriquer un capteur de force conforme à l'une des revendications 1 à 8, caractérisé en ce qu'il comprend les étapes suivantes :

A/ on applique sur le barreau (1) en matériau élastique, électriquement isolant ou isolé en surface, une couche (10) d'un matériau électriquement résistif,

B/ on usine la couche (10) suivant une trajectoire hélicoïdale s'étendant autour et le long du barreau, de façon à laisser en relief sur la surface du barreau (1), une ou plusieurs bandes (11, 12) continues, hélicoïdales, en matériau électriquement résistif.

C/ on usine deux zones longitudinales et symétriques par rapport à l'axe du barreau, de façon à séparer la ou les bandes continues (11, 12) en éléments de bandes (3a, 4, 4a, 5, 5a),

D/ on relie les extrémités de certains des éléments de bandes par des lames conductrices (7, 8, 9) obtenues par dépôt de métal conducteur.

10. Procédé conforme à la revendication 9, caractérisé en ce que lors de l'étape C, on usine sur le barreau (1) deux méplats (2, 3) symétriques par rapport à l'axe (X-X') de ce barreau.

13

11. Procédé conforme à la revendication 9, caractérisé en ce que l'usinage selon l'étape B est réalisé selon une technique dite de "spiralage" qui consiste à faire tourner le barreau (1) autour de son axe (X-X'), à déplacer le barreau suivant la direction (D) de son axe, et à envoyer sur la surface de ce barreau un jet de sable ou un faisceau laser fixe.

FIG_1

FIG_2

FIG_3

FIG.4

FIG.5

FIG.6

**FIG.7**

**FIG.8**

**FIG.9**

**FIG.10**

**FIG.11**

**FIG.12**

FIG_13

FIG_14

FIG_15

FIG_16

FIG_17

FIG_18